(19) Europäisches Patentamt
European Patent Office
Office européen des brevets

(11) Publication number: **0 537 872 A1**

# (12) EUROPEAN PATENT APPLICATION

(21) Application number: **92250295.0**

(22) Date of filing: **12.10.92**

(51) Int. Cl.[5]: **C04B 24/26**, C04B 24/32, C04B 24/16, C04B 28/04

(30) Priority: **18.10.91 US 781060**

(43) Date of publication of application: **21.04.93 Bulletin 93/16**

(84) Designated Contracting States: **AT BE CH DE DK ES FR GB GR IE IT LI LU NL PT SE**

(71) Applicant: **W.R. Grace & Co.-Conn.**
**Grace Plaza, 1114 Ave. of the Americas**
**New York New York 10036(US)**

(72) Inventor: **Arfaei, Ahmad**
**72 Stonegate Road**
**Chelmsford, Massachusetts 01824(US)**
Inventor: **Berke, Neal S.**
**39 Charlemont Court**
**Chelmsford, Massachusetts 02168(US)**
Inventor: **Jardine, Leslie A.**
**102 Dingwell Street No. 2**
**Lowell, Massachusetts 01851(US)**

(74) Representative: **UEXKÜLL & STOLBERG**
**Patentanwälte**
**Beselerstrasse 4**
**W-2000 Hamburg 52 (DE)**

## (54) Corrosion inhibiting hydraulic cement additives and compositions containing same.

(57) An additive for hydraulic cement compositions is provided which advantageously provides corrosion inhibition and set acceleration, in combination with a high level of fluidity and retention of fluidity over a desired period of time. The cement additive comprises an accelerator selected from the group consisting of alkali or alkaline earth metal nitrates, alkali or alkaline earth metal nitrites, and mixtures thereof, and a plasticizer comprising copolymers of an ether comonomer and an ethylenically-unsaturated comonomer.

Fluid hydraulic cement compositions and a method of preparing them are further provided comprising these additive combinations.

EP 0 537 872 A1

## BACKGROUND OF THE INVENTION

This invention relates to additives for cement compositions. More particularly, this invention relates to corrosion inhibiting accelerators for hydraulic cements which combine a corrosion inhibitor with a copolymer plasticizer, and to cement compositions which use these additives to inhibit the corrosion of metal in contact with the cement.

Alkali and alkaline earth metal nitrites are well known as corrosion inhibiting additives for hydraulic cements. U.S. Patent No. 3,427,175, for example, relates to Portland cement compositions containing from about 0.1 to 10 percent calcium nitrite based on the dry weight of Portland cement, and discloses that calcium nitrite inhibits corrosion of iron and steel reinforcing structures in the cement. Calcium nitrite is generally preferred over other alkali and alkaline earth metal nitrites, e.g., sodium nitrite, because it provides effective corrosion inhibition without a reduction in compressive strength or other deleterious effects.

When alkali or alkaline earth metal nitrites are used in hydraulic cement compositions in the concentrations generally necessary to achieve substantial corrosion inhibition, e.g., greater than 0.5% by weight of nitrite based on the weight of dry cement, the nitrite normally also provides a substantial level of set acceleration. This acceleration is advantageous, as unaccelerated cements generally require extended setting times, creating delays for the user. In some applications the level of set acceleration provided by the calcium nitrite alone may be advantageous, (e.g., under cool conditions), while in other applications a slightly reduced level of acceleration may be more desirable (e.g., in warm weather applications). The addition of the nitrite also tends to reduce the slump, or plasticity, of the cement compositions such that the fluidity of the composition is lower initially, and is retained for a shorter time, making the composition more difficult to handle and allowing less working time in the interval prior to setting.

In the past, attempts have been made to increase the slump of cement compositions containing alkali or alkaline earth metal nitrites, and to increase the period of time during which these compositions retain their fluidity. One approach has been to add separately to the cement composition a plasticizer which is capable of increasing the initial slump and extending to a degree the period of time during which the composition remains fluid. However, a high level of the plasticizer often is generally required in order to obtain these effects and in some cases effectively offsets the desired acceleration effect of the nitrite. Also, the addition of this large an amount of plasticizer could cause excessive retardation of the composition and significantly increase its cost. This practice further requires the cement producer or user to purchase, store and dispense two additives, with added inconvenience, labor and cost, and an increased opportunity for error or miscalculation in dispensing the proper respective amounts of the additives.

It has also been desired in some applications, as described above, to control the amount of acceleration provided by the nitrite, such that the setting time of the cement composition falls somewhere between that of an unaccelerated composition and that obtained when the nitrite alone is added to the unaccelerated composition. One approach used to obtain this effect has been to introduce to the composition an additive comprising the nitrite, water, and certain set retarders which form a soluble admixture with the water and nitrite, e.g., hydroxycarboxylic acids, alkali metal or alkaline earth metal salts thereof, or corn syrup, as disclosed in U.S. Patent No. 4,466,834. This approach, although providing advantageous setting times, does not provide compositions having high initial slump without causing an undesirable level of retardation, nor does it extend the period of time during which the compositions remain fluid.

Thus an additive is desired which, when added to hydraulic cement compositions, will provide a desired level of corrosion inhibition and set acceleration, but will nonetheless provide a high level of initial fluidity to the cement slurry and a high level of retention of this fluidity for a desired period of time prior to the accelerated setting of the composition.

## SUMMARY OF THE INVENTION

The present invention relates to an additive combination for hydraulic cement compositions which advantageously provides corrosion inhibition and set acceleration in combination with a high level of fluidity and retention of fluidity over a desired period of time. Accordingly, the present invention relates to a cement additive composition comprising an accelerator selected from the group consisting of alkali or alkaline earth metal nitrites, alkali or alkaline earth metal nitrates, and mixtures thereof, and a plasticizer comprising copolymers of an ethylenically-unsaturated polymerizable monomer and an ether comonomer of the formula

$X\text{-}O\text{-}R^1$ ;  **(I)**

wherein X represents an ethylenically-unsaturated hydrocarbon group having from 2 to 5 carbon atoms or

an unsaturated acyl group having from 2 to 5 carbon atoms, $R^1$ is a polyalcohol group, an alkylene oxide derivative of the polyalcohol group, or a polyether of the formula

$-(R^2O)_n-R^3$ ,

wherein $R^2$ is a linear or branched, substituted or unsubstituted $C_1$ to $C_4$ alkylene group, $R^3$ is hydrogen, a $C_1$ to $C_4$ alkyl group, or a group conforming to the formula

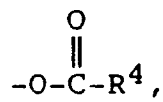 , 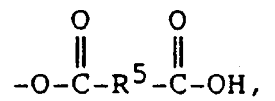 , or 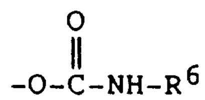 ,

wherein $R^4$, $R^5$, and $R^6$ may each be an alkyl, aryl, aralkyl, or alkaryl group, and n is an integer from 1 to 50. This additive composition has also been found to provide increased compressive strength when added to many cements.

The present invention is further directed to fluid hydraulic cement compositions comprising an accelerator and copolymer plasticizer of the invention.

In its method aspects, the present invention relates to a method of controlling the fluidity and setting time of a cementitious composition comprising the step of adding to the composition an additive of the invention comprising a given accelerator/copolymer plasticizer ratio.

## DETAILED DESCRIPTION OF THE INVENTION

In accordance with the present invention, it has been found that when an alkali or alkaline earth metal nitrite and/or nitrate and copolymer plasticizers in accordance with the invention are added to hydraulic cement compositions, cementitious compositions result which have superior fluidity, a high level of retention of fluidity over a desired period of time, and yet have advantageously accelerated setting times. Thus, this additive combination provides a unique amalgam of properties in the cement composition in that the setting time is decreased substantially but, prior to the accelerated setting, the composition has a high fluidity and a high level of retention of this fluidity. This contrasts favorably with most previous accelerated compositions, in which the decreased setting time is accompanied by a lower fluidity which also decreases rapidly after initial mixing of the composition. In preferred embodiments of this invention, it has been found that the cement compositions retain a substantial proportion of their fluidity for an extended period of time after the initial mixing, compared to mixtures of equal fluidity or slump which do not contain the additive composition of the invention.

As used herein, the term "copolymer plasticizer" refers to the copolymers described herein which are capable of functioning as water reducing admixtures or superplasticizers, depending on the compound and the amount of it added to a cement composition. "Water-reducing admixture" and "superplasticizer" are terms of art which reference the relative water-reducing ability of a material. Water-reducing admixtures provide a water reduction capability of 5% to 12% (ASTM C-494 Type A or Type D), while superplasticizers provide water reduction in excess of 12% (ASTM C-494 Type F or Type G.) Superplasticizers also produce flowing concrete according to ASTM C-1017. For brevity and convenience the copolymers of this invention are referred to hereinafter simply as plasticizers. This term includes copolymers of this invention which function as water reducing admixtures or superplasticizers, as defined above.

The plasticizers used of the invention include those described in U.S. Patent No. 4,946,904, the disclosure of which is herein incorporated by reference, in which maleic anhydride is copolymerized with an ether comonomer of formula (I) wherein $R^3$ is other than hydrogen. Such plasticizers also comprise the hydrolyzed product of the copolymer, or a salt thereof; "hydrolyzed product of the copolymer" being intended to mean the product of a hydrolyzed maleic acid unit resulting from the hydrolysis of a maleic anhydride unit in the copolymer. The salt of the hydrolyzed product of the copolymer is a salt formed by the maleic acid unit and is preferably an alkali or alkaline earth metal salt, such as a lithium or sodium salt, calcium or magnesium salt, or an ammonium or organic amine salt.

Examples of such plasticizers are commercially available from Nippon Oil and Fats Co. Ltd. (Tokyo, Japan), under the tradename MALIALIM, and have the general formula:

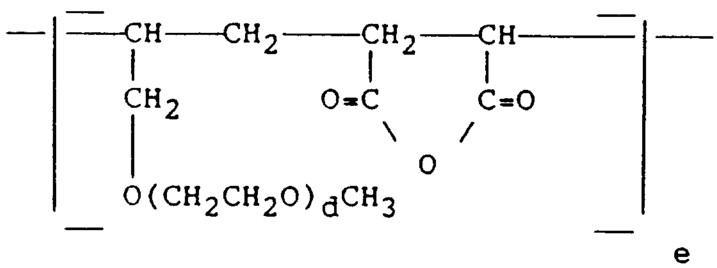

wherein d and e are each individually positive numbers in a range from 1 to 50. Particularly preferred is a copolymer sold under the tradename MALIALIM AKM 0531 copolymer, having the general formula above, wherein d is 11 and e is 30. Another such copolymer is MALIALIM AKM 1511 copolymer, having the general formula above, wherein d is 33 and e is 10. Two other copolymers which may be used in the invention include those having the following general formula:

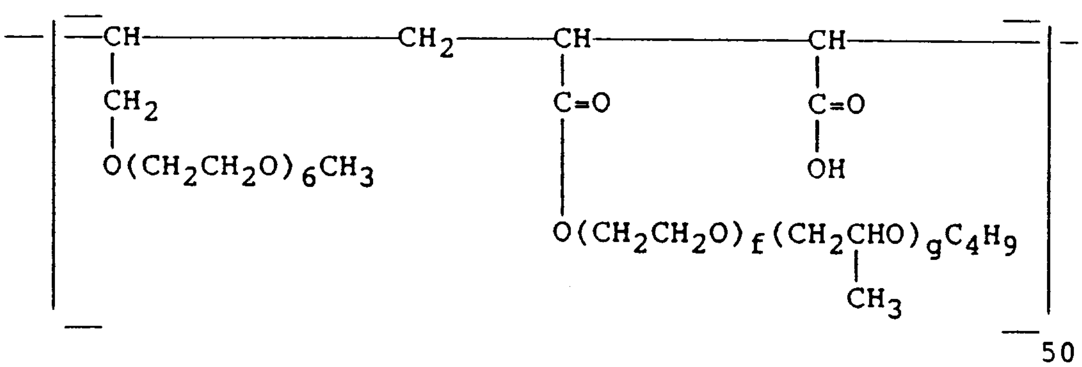

wherein f and g are 8 and 0, and 4 and 4, respectively.

The plasticizers of the invention may also comprise copolymers of ethylenically-unsaturated mono-acids and a ether comonomer of Formula (I). Such plasticizers are described in a copending U.S. patent application filed October 18, 1991 (Attorney Docket No 3334), the disclosure of which is herein incorporated by reference. Specifically, these particular plasticizers comprise copolymers of an olefinic (i.e., ethylenically-unsaturated) mono-carboxylic acid comonomer or an ester or salt thereof, or an olefinic sulfur acid comonomer or a salt thereof, copolymerized with an ether comonomer of formula (I). An exemplary plasticizer of this type is a copolymer of acrylic acid and an allylic ether of the formula $CH_2=CHCH_2O$-$(CH_2CH_2O)_nH$, average molecular weight 550g/mole, wherein n is as described above.

The accelerator used in compositions of the invention is selected from the group consisting of alkali or alkaline earth metal nitrites, alkali or alkaline earth metal nitrates, and mixtures thereof. As used herein, the term "alkali metal nitrite" refers to any nitrite salt of the Group Ia elements, while the term "alkaline earth metal nitrite" refers to any nitrite salt of the Group IIa elements. Preferred nitrites are calcium nitrite, potassium nitrite and sodium nitrite. Most preferably the nitrite used is calcium nitrite. The terms "alkali metal nitrate" and "alkaline earth metal nitrate" refer respectively to any nitrate salt of the Group Ia and Group IIa elements. Preferred nitrates are calcium, sodium and potassium nitrate, with calcium most preferred. Either a nitrate or nitrite salt may be used alone, or a combination of nitrate and nitrite may be used. Blends of nitrate and nitrite often provide improved cold weather acceleration; a preferred ratio of nitrate to nitrite is in the range of from about 1:1 to 4:1, most preferably about 3:1.

The term "cement composition" as used herein refers to pastes, mortars, grouts such as oil well cementing grouts, and concrete compositions comprising a hydraulic cement binder. The terms "paste", "mortar" and "concrete" are terms of art; pastes are mixtures composed of a hydraulic cement binder (usually, but not exclusively, Portland cement, and may also include fly ash, blast furnace slag, and silica fume) and water; mortars are pastes additionally including fine aggregate, and concretes are mortars additionally including coarse aggregate. Such compositions may additionally include other admixtures such as defoaming agents, other water-reducers, air-entraining or detraining agents, set accelerators and retarders, and other components known to those in the art for altering properties of the composition.

In order to facilitate addition and mixing of the accelerator and plasticizer with the cement composition, it is generally advantageous to add both together in the form of a single additive, preferably as an aqueous

solution or dispersion of the accelerator and plasticizer. However, if desired the two components could be added to the composition separately. The cement composition may be in a dry powder form or mixed with water to form a plastic mix. It is generally preferred to add the additives of the invention to the cement in connection with preparation of an aqueous hydraulic cement slurry, i.e., with the mix water or as additives to the already formed slurry composition. The additives may, however, be added at an earlier stage, such as during the grinding of clinker to prepare the cement.

The amount of the accelerator present in the hydraulic cement compositions of the invention will vary according to the requirements of the given application. The level of the accelerator is generally at least about 0.25% of the dry weight of cement in the composition, preferably from about 0.5% to about 15%, and more preferably from about 1% to about 5%. The most preferable level within this range may be dictated by corrosion resistance requirements, the desired degree of acceleration, or economic considerations.

The amount of the plasticizer present in the hydraulic cement compositions will also vary according to the requirements of the given application. Higher levels of the plasticizer will produce maximum fluidity and maximum retention of fluidity, while lower levels provide good fluidity and fluidity retention, faster setting times and lower cost. The level of plasticizer present is generally at least about 0.01% of the dry weight of cement in the composition, preferably from about 0.01% to 2.0%, and more preferably from about 0.02% to 0.25%.

The ratio of the plasticizer to the accelerator in the composition may be varied according to the requirements of the given application by changing the level of each component in the composition within the ranges specified above. In accordance with the present invention, particularly preferred weight ratios of plasticizer to accelerator are from about 1:50 to 1:3.

In the additive compositions of the present invention comprising the plasticizer and the accelerator, either as a dry mix or in an aqueous solution or dispersion, the blended additive will generally contain the same proportions of the two components as desired in the cement composition. Thus, since the ratio of the plasticizer to the accelerator will generally be in the range of from 1:50 to 1:3 in the cement composition, the two components may also be blended in ratios of from 1:50 to 1:3 in the additive composition. In the embodiment in which the two components are provided in an aqueous carrier, the admixture may be prepared by blending respective aqueous solutions or dispersions of the plasticizer and accelerator.

Other components may be added to the compositions of this invention in manners and amounts commonly known to those skilled in the art. Such components may include, for example, water reducing agents, air entraining or detraining agents, pozzolanic materials, and retarders. Such conventional agents can be used in known manner provided that they do not detract from the fluidity, acceleration or other desired properties.

The following example is given for illustrative purposes only and is not meant to be of limiting effect. Unless otherwise indicated, all amounts in the following example are dry weight percent, based on the total dry weight of the hydraulic cement binder in the composition.

EXAMPLE 1

Two cement compositions were prepared. The same type Portland cement was used in each composition, the water to cement ratio for each composition was 0.47, and the cement factor was about 610 pounds/$yd^3$. One composition (Composition 1) contained MALIALIM AKM 0531 additive, at a level of 0.05%, while the other (Composition 2) contained 2.22% of an additive of the invention comprising MALIALIM AKM 0531 additive and calcium nitrite, in a ratio of 1:44. (Both compositions thus contained the same amount of superplasticizer.)

Slump was measured for each composition at 15 minute intervals according to ASTM C-143. The initial and final setting times were also measured for each composition, according to ASTM C-403, and the compressive strengths after 1, 7 and 28 days, according to ASTM C-39. The results of this testing are shown in Table 1.

The data of Table 1 demonstrate that when calcium nitrite is used in combination with relatively small amounts of a plasticizer according to the invention, cement compositions are produced which have a substantially accelerated setting time and yet also have a high initial fluidity and good retention of this fluidity. Moreover, Composition 2, containing the additive of the invention, exhibits significantly higher compressive strengths than Composition 1.

**TABLE 1**

| Sample | Slump (inches) | | | | Setting Time (hrs) | | Compressive Strength (psi) | | |
|---|---|---|---|---|---|---|---|---|---|
| | 15 | 30 | 45 | 60 | Initial | Final | 1 day | 7 days | 28 days |
| | | minutes | | | | | | | |
| 1 | 7.00 | 4.25 | 4.00 | 2.50 | 4.18 | 6.14 | 2246 | 5328 | 6261 |
| 2 | 7.75 | 6.50 | 4.50 | 3.00 | 2.05 | 3.07 | 2907 | 6905 | 8575 |

## Claims

1. A cement composition comprising hydraulic cement, an accelerator selected from the group consisting of alkali earth metal nitrates, alkaline earth metal nitrates, alkali earth metal nitrites, alkaline earth metal nitrites and mixtures thereof, and a copolymer of an ethylenically unsaturated comonomer and an ether comonomer of the formula

X-O-$R^1$ ;     **(I)**

wherein X represents an ethylenically-unsaturated hydrocarbon group having from 2 to 5 carbon atoms or an unsaturated acyl group having from 2 to 5 carbon atoms, $R^1$ is a polyalcohol group, an alkylene oxide derivative of the polyalcohol group, or a polyether of the formula

$-(R^2O-)_n-R^3$ ,

wherein $R^2$ is a linear or branched, substituted or unsubstituted $C_1$ to $C_4$ alkylene group, $R^3$ is hydrogen, a $C_1$ to $C_4$ alkyl group, or a group conforming to the formula

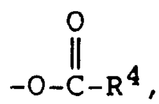 , 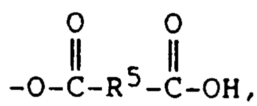 , or 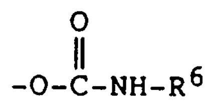 ,

wherein $R^4$, $R^5$, and $R^6$ may each be an alkyl, aryl, aralkyl, or alkaryl group, and n is an integer from 1 to 50.

**2.** The composition of claim 1, wherein
a) said ethylenically-unsaturated comonomer is an olefinic mono- carboxylic acid, salt, ester or anhydride thereof, or an olefinic sulfur acid or salt thereof;
b) the mole ratio of said ethylenically-unsaturated monomer to said ether comonomer is in the range of from about 1:0.3 to 1:0.7, and
c) X of said ether comonomer is an allyl group, $R^1$ is said polyether, $R^2$ is ethylene, $R^3$ is hydrogen, n is in the range of from 5 to 20, and said ethylenically-unsaturated monomer is acrylic acid or a salt thereof.

**3.** The composition of claim 1 wherein said ethylenically-unsaturated comonomer is maleic anhydride, $R^3$ is a $C_1$ to $C_4$ alkyl group, or a group conforming to the formula

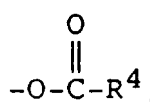 , 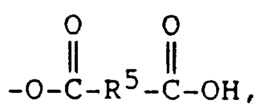 , or 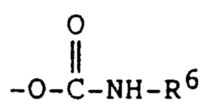 ,

wherein $R^4$, $R^5$, and $R^6$ may each be an alkyl, aryl, aralkyl, or alkaryl group, and n is an integer from 1 to 50, and said copolymer is additionally a hydrolyzed product of said copolymer or a salt of said hydrolyzed product.

**4.** The composition of claim 1 wherein said plasticizer has the formula:

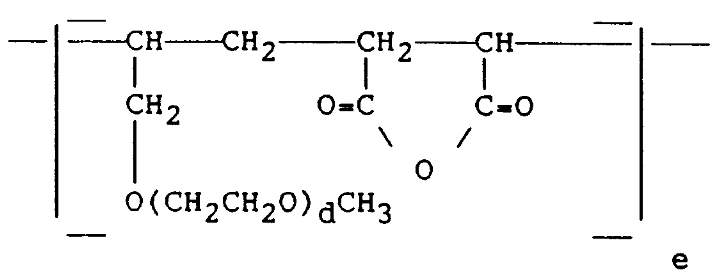

wherein d and e are positive integers.

**5.** The composition of claim 4 wherein d is 11 and e is 30.

**6.** The composition of claim 4 wherein d is 33 and e is 10.

**7.** The composition of claim 1 wherein the plasticizer has the formula:

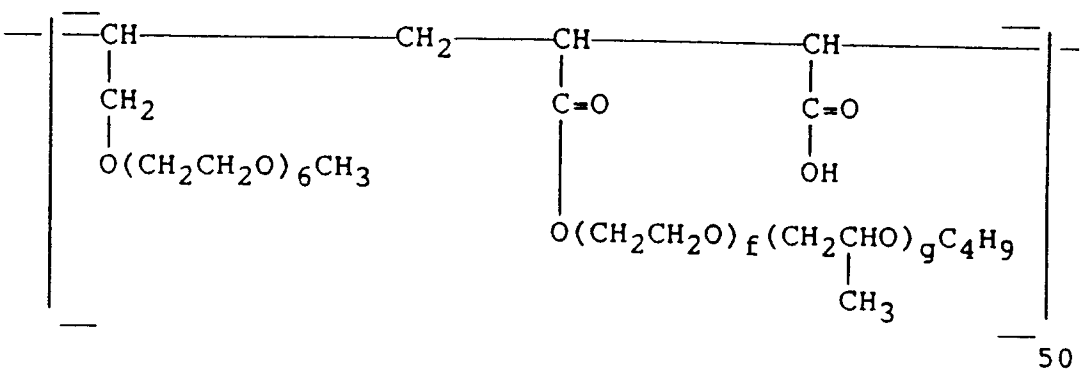

wherein f and g are 8 and 0, or 4 and 4, respectively.

**8.** The composition of claim 1 wherein said accelerator is calcium nitrite.

**9.** The composition of claim 1 comprising from about 0.01% to 2.0% by weight of said plasticizer, based on the weight of said hydraulic cement.

**10.** The composition of claim 1 comprising at least about 0.25% alkali earth metal nitrite or alkaline earth metal nitrite.

**11.** The composition of claim 1 comprising from about 0.05% to about 15% by weight of said alkali earth metal nitrite or alkaline earth metal nitrite, based on the weight of said hydraulic cement.

**12.** The composition of claim 1 comprising from about 0.01% to 2% by weight of said plasticizer, based on the weight of said hydraulic cement.

**13.** The composition of claim 1 wherein the weight ratio of plasticizer to accelerator is from 1:50 to 1:3.

**14.** The composition of claim 1 wherein said plasticizer has the formula:

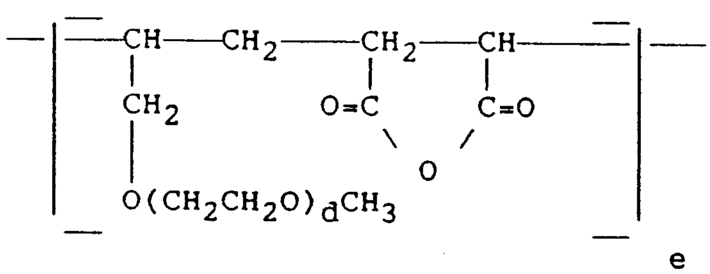

wherein d and e are 11 and 30, respectively, and the ratio of plasticizer to accelerator is about 1:44.

**15.** The composition of claim 1 wherein said hydraulic cement is Portland cement.

**16.** A cement additive comprising:

a) a plasticizer comprising of copolymers of an ethylenically-unsaturated monomer and an ether comonomer of the formula

$X\text{-}O\text{-}R^1$ ; **(I)**

wherein X represents an ethylenically-unsaturated hydrocarbon group having from 2 to 5 carbon atoms or an unsaturated acyl group having from 2 to 5 carbon atoms, $R^1$ is a polyalcohol group, an

alkylene oxide derivative of the polyalcohol group, or a polyether of the formula

$-(R^2O-)_n-R^3$ ,

wherein $R^2$ is a linear or branched, substituted or unsubstituted $C_1$ to $C_4$ alkylene group, $R^3$ is hydrogen, a $C_1$ to $C_4$ alkyl group, or a group conforming to the formula

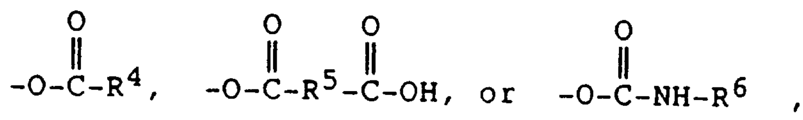

wherein $R^4$, $R^5$, and $R^6$ may each be an alkyl, aryl, aralkyl, or alkaryl group, and n is an integer from 1 to 50; and

b) an accelerator selected from the group consisting of alkali earth metal nitrates, alkaline earth metal nitrates, alkali earth metal nitrites, alkaline earth metal nitrites and mixtures thereof.

**17.** The additive of claim 16, wherein

a) said ethylenically-unsaturated comonomer is an olefinic mono- carboxylic acid, salt, ester or anhydride thereof, or an olefinic sulfur acid or salt thereof;

b) the mole ratio of said ethylenically-unsaturated monomer to said ether comonomer is in the range of from about 1:0.3 to 1:0.7, and

b) X of said ether comonomer is an allyl group, $R^1$ is said polyether, $R^2$ is ethylene, $R^3$ is hydrogen, n is in the range of from 5 to 20, and said ethylenically-unsaturated monomer is acrylic acid or a salt thereof.

**18.** The additive of claim 17 wherein said ethylenically-unsaturated comonomer is maleic anhydride, $R^3$ is a $C_1$ to $C_4$ alkyl group, or a group conforming to the formula

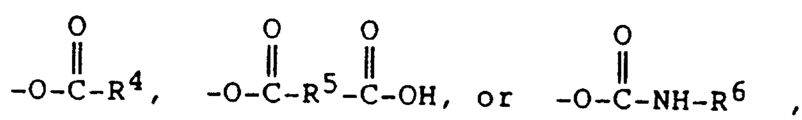

wherein $R^4$, $R^5$, and $R^6$ may each be an alkyl, aryl, aralkyl, or alkaryl group, and n is an integer from 1 to 50, and said copolymer is additionally a hydrolyzed product of said copolymer or a salt of said hydrolyzed product.

**19.** The additive of claim 16 wherein the plasticizer has the formula:

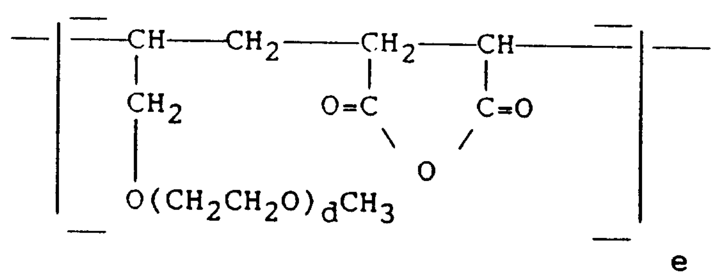

wherein d and e are positive integers.

**20.** The additive of claim 19 wherein the plasticizer is neutralized with an alkali metal, alkaline earth metal, or amine.

**21.** The additive of claim 19 wherein d is 11 and e is 30.

**22.** The additive of claim 19 wherein d is 33 and e is 10.

**23.** The additive of claim 16 wherein the plasticizer has the formula:

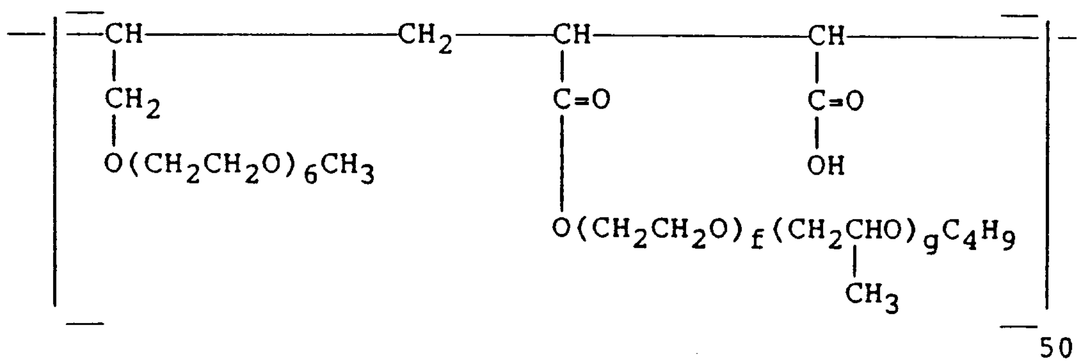

wherein f and g are 8 and 0, or 4 and 4, respectively.

**24.** The additive of claim 16 wherein the alkali earth metal nitrite or alkaline earth metal nitrite is calcium nitrite.

**25.** The additive of claim 16 wherein the weight ratio of plasticizer to accelerator is from 1:50 to 1:3.

**26.** The additive of claim 16 wherein said plasticizer has the formula:

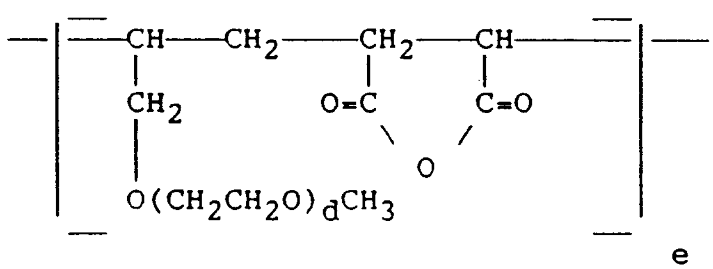

wherein d and e are 11 and 30, respectively, and the ratio of plasticizer to accelerator is about 1:44.

**27.** A method of controlling the fluidity and setting time of a cementitious composition comprising the step of adding to a hydraulic cement binder an additive comprising an accelerator selected from the group consisting of alkali and alkaline earth metal nitrates, alkali and alkaline earth metal nitrites, and mixtures thereof, and a plasticizer comprising of copolymers of an ethylenically-unsaturated monomer and an ether comonomer of the formula

X-O-$R^1$ ; **(I)**

wherein X represents an ethylenically-unsaturated hydrocarbon group having from 2 to 5 carbon atoms or an unsaturated acyl group having from 2 to 5 carbon atoms, $R^1$ is a polyalcohol group, an alkylene oxide derivative of the polyalcohol group, or a polyether of the formula

$-(R^2O-)_n-R^3$ ,

wherein $R^2$ is a linear or branched, substituted or unsubstituted $C_1$ to $C_4$ alkylene group, $R^3$ is hydrogen, a $C_1$ to $C_4$ alkyl group, or a group conforming to the formula

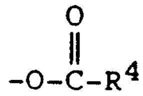, 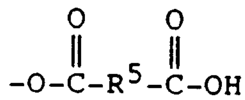, or 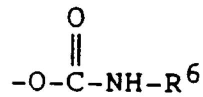 ,

wherein $R^4$, $R^5$, and $R^6$ may each be an alkyl, aryl, aralkyl, or alkaryl group, and n is an integer from 1 to 50.; wherein said plasticizer and accelerator are present in the additive in a weight ratio of from about 1:50 to 1:3, and wherein said ratio is selected such that a desired fluidity and setting time are obtained.

European Patent Office

# EUROPEAN SEARCH REPORT

Application Number

EP 92 25 0295

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 291 073 (NIPPON OIL AND FATS COMPANY, LTD.)<br>* abstract; claims 1-2 *<br>* column 3, line 36 - line 46 *<br>* column 5, line 32 - line 42 *<br>--- | 1,3, 8-13, 15-16, 20,24-25 | C04B24/26<br>C04B24/32<br>C04B24/16<br>C04B28/04 |
| D,Y | EP-A-0 416 378 (W.R. GRACE & CO.)<br>* abstract; claims 1-5,8-10,13-14 *<br>* page 3, line 30 - line 51 *<br>* page 4, line 3 - line 18; example 1 *<br>--- | 1,3, 8-13, 15-16, 20,24-25 | |
| A | EP-A-0 056 627 (NIPPON SHOBKUBAI KAGAKU KOGYO CO., LTD.)<br>* abstract; claims 1-3 *<br>* page 2, line 14 - page 4, line 4 *<br>* page 6, line 24 - page 7, line 20 *<br>----- | 1-6, 14-20 | |

TECHNICAL FIELDS SEARCHED (Int. Cl.5)

C04B

The present search report has been drawn up for all claims

| Place of search | Date of completion of the search | Examiner |
|---|---|---|
| THE HAGUE | 21 JANUARY 1993 | OLSSON S.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)